# EUROPÄISCHE PATENTANMELDUNG

(11) **EP 4 089 448 A1**
(43) Veröffentlichungstag der Anmeldung: **16.11.2022**
(21) Anmeldenummer: 21173346.4
(22) Anmeldetag: 11.05.2021
(51) Int. Cl.: G02B 5/09, G02B 5/10, G02B 26/00, G02B 27/14

(54) **VORRICHTUNG ZUM LENKEN EINES LICHTSTRAHLS**

(71) Anmelder: RIEGL Laser Measurement Systems GmbH, 3580 Horn (AT)
(72) Erfinder: RIEGER, Peter, 3824 Grossau (AT)
(74) Vertreter: Weiser & Voith Patentanwälte Partnerschaft

(57) **Zusammenfassung**

Die vorliegenden Erfindung betrifft eine Vorrichtung (1) zum Lenken eines von einer Strahlungsquelle (3) ausgesandten Lichtstrahls (2), mit einem optischen Eingangselement (5), das zum Verengen des ausgesandten Lichtstrahls (2) zu einem verengten Lichtstrahl (6) ausgebildet ist, und einem rotierbaren Spiegelrad (8), welches derart in dem verengten Lichtstrahl (6) angeordnet ist, dass beim Rotieren aufeinanderfolgend ein erster und ein zweiter Sektor (11, 12) des Spiegelrads (8) von dem verengten Lichtstrahl (6) getroffen werden, wobei der erste Sektor (11) den verengten Lichtstrahl (6) entlang eines ersten Strahlengangs (14) reflektiert und der zweite Sektor (12) den verengten Lichtstrahl (6) entlang eines vom ersten verschiedenen zweiten Strahlengangs (19) reflektiert oder passieren lässt, und wobei im ersten Strahlengang (14) ein erstes optisches Ausgangselement (15) und im zweiten Strahlengang (19) ein zweites optisches Ausgangselement (20) angeordnet ist, die jeweils den verengten Lichtstrahl (6) zu einem erweiterten Lichtstrahl (16, 21) erweitern.

## Beschreibung

Die vorliegende Erfindung betrifft eine Vorrichtung zum Lenken eines von einer Strahlungsquelle ausgesandten Lichtstrahls, insbesondere eines gepulsten Laser-Lichtstrahls.

Zum Lenken eines Lichtstrahls werden verschiedene lichtbrechende bzw. -reflektierende optische Elemente eingesetzt, z.B. Spiegel, Linsen, Prismen und Glasfasern, welche beispielsweise in Schwenk- oder Drehbewegung versetzt werden, wenn der Lichtstrahl entlang verschiedener Strahlengänge gelenkt werden soll. Eine mögliche Anwendung betrifft Bild- oder Videoprojektoren, die mit einem Array von einzeln beweglichen Mikrospiegeln, sogenannten "Micro-Electromechanical System" - oder "MEMS" - Spiegeln, ausgestattet sind. Jedes Pixel des projizierten Bilds wird dabei von einem Spiegel des Arrays erzeugt, indem der Spiegel einen einfallenden Lichtstrahl entweder zu einer Ausgangsoptik oder daran vorbei in eine Lichtsenke des Projektors reflektiert, u.zw. getaktet, sodass je nach Taktverhältnis auch die Helligkeit des Pixels in der Projektion verändert wird. Die Bewegungsgeschwindigkeit der MEMS-Spiegel und damit das Lenken der Lichtstrahlen ist für die Projektion von Bildern und Filmen bzw. Videos - auch in Farbe - ausreichend hoch. Für andere Anwendungen, z.B. Laserscanner, welche Laserpulse mit Pulsraten von mehreren hundert Kilohertz aussenden, sind hingegen derartige bewegliche Spiegel, Linsen, Prismen oder Glasfasern zu langsam, um die in derart rascher Folge eintreffenden Laserpulse präzise entlang verschiedener vorgegebener Strahlengänge zu lenken, sodass viele Laserpulse ungenutzt blieben.

Die Erfindung setzt sich zum Ziel, eine Vorrichtung zu schaffen, welche ein einfaches und dennoch präzises Lenken eines Lichtstrahls mit besonders raschen Übergängen zwischen verschiedenen Strahlengängen ermöglicht.

Dieses Ziel wird erfindungsgemäß mit einer Vorrichtung der vorgenannten Art erreicht, mit
einem optischen Eingangselement, das zum Verengen des ausgesandten Lichtstrahls zu einem verengten Lichtstrahl ausgebildet ist, und
einem um eine Achse rotierbaren Spiegelrad, welches derart in dem verengten Lichtstrahl angeordnet ist, dass beim Rotieren aufeinanderfolgend ein erster und ein zweiter Sektor des Spiegelrads von dem verengten Lichtstrahl getroffen werden,
wobei der erste Sektor dazu ausgebildet ist, den verengten Lichtstrahl entlang eines ersten Strahlengangs zu reflektieren, und der zweite Sektor dazu ausgebildet ist, den verengten Lichtstrahl entlang eines vom ersten verschiedenen zweiten Strahlengangs zu reflektieren oder passieren zu lassen, und
wobei im ersten Strahlengang nach dem Spiegelrad ein erstes optisches Ausgangselement und im zweiten Strahlengang nach dem Spiegelrad ein zweites optisches Ausgangselement angeordnet ist, die jeweils zum Erweitern des verengten Lichtstrahls zu einem erweiterten Lichtstrahl ausgebildet sind.

Die Erfindung schafft eine optomechanische Weiche, welche den von der Strahlungsquelle ausgesandten Lichtstrahl entweder entlang des ersten oder des zweiten Strahlengangs lenkt. Durch die Verwendung eines Spiegelrads kann die Aufeinanderfolge des ersten und zweiten Sektors beim Rotieren des Spiegelrads durch Drehzahlerhöhung der Rotation des Spiegelrads beschleunigt werden. Die Verengung des von der Strahlungsquelle ausgesandten Lichtstrahls zum verengten Lichtstrahl, in welchem das Spiegelrad angeordnet ist, bewirkt dabei einen besonders raschen Wechsel vom ersten zum zweiten Sektor und damit einen besonders raschen, flankensteilen Übergang des Lichtstrahls nach dem Spiegelrad vom ersten in den zweiten Strahlengang, wesentlich rascher als mit einem MEMS-Spiegel. Auch ist die Präzision beim Lenken besonders hoch, da kein Spiegel geschwenkt wird, sodass der Lichtstrahl nicht zwischendurch in eine andere Richtung als entlang der vorgesehenen Strahlengänge gelenkt wird und dadurch ungenutzt bleibt. Ein bei MEMS-Spiegeln oft notwendiges Synchronisieren der Spiegelbewegung mit der Strahlungsquelle oder anderen bewegten Bauelementen kann entfallen, was die Vorrichtung maßgeblich vereinfacht.

Besonders günstig ist, wenn das Spiegelrad jeweils zwei oder mehr erste und zweite Sektoren hat, wobei in Umfangsrichtung des Spiegelrads auf jeden ersten Sektor ein zweiter Sektor folgt und umgekehrt. Auf diese Weise wird der Lichtstrahl ohne Veränderung der Drehzahl des Spiegelrads bei jeweils zwei ersten und zweiten Sektoren anstelle von lediglich jeweils einem ersten und zweiten Sektor in doppelter so rascher Folge entlang des ersten, darauf folgend des zweiten und darauf folgend wieder des ersten Strahlengangs gelenkt, bei jeweils mehreren ersten und zweiten Sektoren entsprechend mehrmals so rasch. Auch lässt sich ein Spiegelrad mit jeweils zwei oder mehr ersten und zweiten Sektoren durch kreissymmetrische Anordnung der Sektoren einfacher ohne Unwucht herstellen, sodass zusätzlich eine höhere Drehzahl des Spiegelrads erzielbar ist.

Zur Ausführung der beiden Sektoren des Spiegelrads sind unterschiedliche Varianten möglich, welche in eine erste Gruppe, bei welcher der zweite Sektor des Spiegelrads den verengten Lichtstrahl jeweils entlang des zweiten Strahlengangs passieren lässt, und eine zweite Gruppe untergliedert werden können, bei welcher der zweite Sektor des Spiegelrads den verengten Lichtstrahl jeweils entlang des zweiten Strahlengangs reflektiert.

Gemäß einer ersten Variante der genannten ersten Gruppe hat jeder erste Sektor zum Reflektieren des verengten Lichtstrahls einen Spiegel und jeder zweite Sektor zum Passierenlassen des verengten Lichtstrahls eine Öffnung. Dies ermöglicht einen einfachen Aufbau des Spiegelrads z.B. durch Stanzen oder Bohren einer oder mehrerer Öffnungen in eine vorab oder später zumindest teilweise verspiegelte Kreisscheibe.

In einer alternativen Variante der ersten Gruppe hat jeder erste Sektor zum Reflektieren des verengten Lichtstrahls einen radial abstehenden verspiegelten Flügel und ist jeder zweite Sektor zum Passierenlassen des verengten Lichtstrahls flügellos. Dabei kann das Spiegelrad z.B. mit einzelnen Flügeln Sektor für Sektor aufgebaut werden.

In den Varianten der genannten ersten Gruppe bestehen infolge des möglichen weiten Abstands des ersten vom zweiten optischen Ausgangselement nur geringe Einschränkungen in der Gestaltung des ersten und des zweiten Strahlengangs sowie des ersten und zweiten optischen Ausgangselements selbst. Ferner entfällt in dem spiegellosen zweiten Strahlengang jegliche Spiegeljustierung und eine allfällige spiegelbedingte Abschwächung oder Aufweitung des Lichtstrahls tritt nicht auf. Auch eine Erwärmung des Spiegelrads infolge eines hochenergetischen Lichtstrahls findet nicht statt, solange der verengte Lichtstrahl vom zweiten Sektor passieren gelassen wird, sodass die thermische Belastung des Spiegelrads halbiert ist.

Unter den Varianten der genannten zweiten Gruppe ist besonders vorteilhaft, wenn jeder erste und jeder zweite Sektor zum Reflektieren des verengten Lichtstrahls jeweils einen zur genannten Achse normalen Planspiegel hat, wobei der Planspiegel jedes zweiten Sektors gegenüber dem Planspiegel jedes ersten Sektors axial versetzt ist. Da ein Planspiegeln einen Lichtstrahl nicht verformt, kann auch eine Kompensation für eine spiegelbedingte Verformung entfallen. Ferner ist der Aufbau eines derartigen Spiegelrads aufgrund der Verwendung von herkömmlichen Planspiegel vergleichsweise einfach.

Alternativ dazu hat jeder erste und jeder zweite Sektor zum Reflektieren des verengten Lichtstrahls jeweils einen Spiegel in Form eines zur genannten Achse koaxialen Drehkegelmantelsegments, wobei das Drehkegelmantelsegment jedes zweiten Sektors einen vom Drehkegelmantelsegment jedes ersten Sektors verschiedenen Kegelöffnungswinkel hat. Dies ermöglicht einen besonders großen Spielraum in der Anordnung der optischen Ausgangselemente der Vorrichtung; beispielsweise lässt sich eine besonders raumsparende Vorrichtung realisieren.

In einer weiteren alternativen Ausführungsvariante der genannten zweiten Gruppe hat jeder erste und jeder zweite Sektor zum Reflektieren des verengten Lichtstrahls jeweils einen Spiegel in Form eines zur genannten Achse koaxialen Drehzylindermantelsegments, wobei das Drehzylindermantelsegment jedes zweiten Sektors einen vom Drehzylindermantelsegment jedes ersten Sektors verschiedenen Zylinderradius hat. Die Vorrichtung kann dabei in axialer Richtung besonders flach aufgebaut werden.

Das optische Eingangselement kann z.B. durch eine oder mehrere Linsen od.dgl. gebildet sein, welche den von der Strahlungsquelle ausgesandten Lichtstrahl fokussieren und dadurch verengen, beispielsweise indem der Fokus im Strahlengang vor, nach oder direkt auf einen Auftreffpunkt des Lichtstrahls am ersten bzw. zweiten Sektor zu liegen kommt. Besonders günstig ist hingegen, wenn das optische Eingangselement ein Kollimator zum Verengen des von der Strahlungsquelle ausgesandten Lichtstrahls zu einem kollimierten verengten Lichtstrahl ist. Auf diese Weise ist der verengte Lichtstrahl durch ein paralleles Strahlenbündel mit über die Länge des verengten Lichtstrahls im Wesentlichen gleichbleibenden Eigenschaften, insbesondere gleichbleibender Energiedichte, gebildet, was den Aufbau der Vorrichtung weiter vereinfacht.

Da häufig ausgangsseitig der Vorrichtung ein kollimierter Lichtstrahl gewünscht ist, ist ferner vorteilhaft, wenn das erste und das zweite optische Ausgangselement jeweils ein Kollimator ist, welcher zum Erweitern des verengten Lichtstrahls zu einem kollimierten erweiterten Lichtstrahl ausgebildet ist. Ein solcher Kollimator kann ferner eine allfällige Strahlaufweitung durch einen z.B. drehkegel- bzw. drehzylindermantelsegmentförmigen Spiegel kompensieren.

Wenn der von der Strahlungsquelle ausgesandte Lichtstrahl abwechselnd in zwei Glasfasern eingekoppelt werden soll, ist besonders einfach, wenn das erste und das zweite optische Ausgangselement jeweils an eine Glasfaser angeschlossen ist. Dies ermöglicht eine unmittelbare Einkopplung in jede der beiden Glasfasern.

Besonders vorteilhaft ist, wenn zum Rotieren an das Spiegelrad ein von einem Drehzahlregler gespeister Motor angekuppelt ist. Auf diese Weise kann das Rotieren des Spiegelrads und damit das Lenken des Lichtstrahls durch Drehzahlregelung mit den jeweiligen Erfordernissen in Einklang gebracht werden.

In einer besonders günstigen Ausführungsform umfasst die Vorrichtung ein weiteres optisches Eingangselement zum Erzeugen eines weiteren verengten Lichtstrahls aus einem von einer weiteren Strahlungsquelle ausgesandten weiteren Lichtstrahl, ein in einem weiteren ersten Strahlengang nach dem Spiegelrad angeordnetes weiteres erstes und ein in einem weiteren zweiten Strahlengang nach dem Spiegelrad angeordnetes weiteres zweites optisches Ausgangselement, die jeweils zum Erweitern des weiteren verengten Lichtstrahls zu einem weiteren erweiterten Lichtstrahl ausgebildet sind, wobei das Spiegelrad derart in dem weiteren verengten Lichtstrahl angeordnet ist, dass der erste Sektor den weiteren verengten Lichtstrahl entlang des weiteren ersten Strahlengangs reflektiert und der zweite Sektor den weiteren verengten Lichtstrahl entlang des weiteren zweiten Strahlengangs reflektiert oder passieren lässt. Ein und dasselbe Spiegelrad lässt die Vorrichtung somit zu einer doppelten optomechanischen Weiche werden. Hinsichtlich weiterer Varianten dieser Ausführungsform wird auf die vorangegangenen Ausführungen verwiesen.

Die Erfindung wird nachstehend anhand von in den beigeschlossenen Zeichnungen dargestellten Ausführungsbeispielen näher erläutert. In den Zeichnungen zeigen:
Fig. 1 eine erfindungsgemäße Vorrichtung mit einem Spiegelrad, einem optischen Eingangselement und zwei optischen Ausgangselementen in einer Perspektivansicht von schräg oben;
Fig. 2 eine Variante des Spiegelrads der Vorrichtung von Fig. 1 mit Öffnungen in Draufsicht;
die Fig. 3a und 3b zwei Varianten des Spiegelrads der Vorrichtung von Fig. 1 mit unterschiedlichen Flügeln jeweils in Draufsicht;
die Fig. 4a und 4b eine Variante des Spiegelrads der Vorrichtung von Fig. 1 mit zwei Planspiegeln in Draufsicht (Fig. 4a) bzw. zusammen mit den optischen Eingangs- und Ausgangselementen in einer Perspektivansicht von schräg oben (Fig. 4b);
die Fig. 5a und 5b eine Variante des Spiegelrads der Vorrichtung von Fig. 1 mit zwei verschiedenen Drehkegelmantelsegmenten in Draufsicht (Fig. 5a) bzw. zusammen mit den optischen Eingangs- und Ausgangselementen in einer Perspektivansicht von schräg oben (Fig. 5b);
die Fig. 6a und 6b eine Variante des Spiegelrads der Vorrichtung von Fig. 1 mit zwei verschiedenen Drehzylindermantelsegmenten in Draufsicht (Fig. 6a) bzw. zusammen mit den optischen Eingangs- und Ausgangselementen in einer Perspektivansicht von schräg vorne (Fig. 6b); und
Fig. 7 eine Variante der Vorrichtung von Fig. 1 mit einem Spiegelrad und verdoppelten optischen Eingangs- und Ausgangselementen in einer Perspektivansicht von schräg oben.

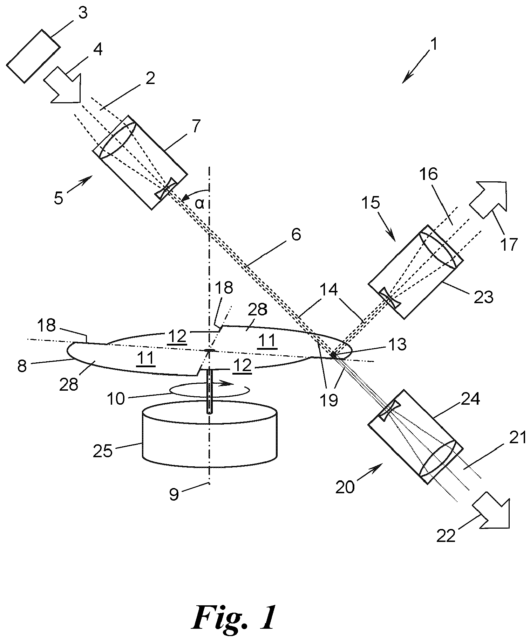

Fig. 1 zeigt eine Vorrichtung 1, welche einen Lichtstrahl 2 lenkt. Der Lichtstrahl 2 wird von einer externen, hier lediglich schematisch dargestellten Strahlungsquelle 3 in einer durch einen Pfeil 4 symbolisierten Richtung ausgesandt. Der ausgesandte Lichtstrahl 2 kann optional ein Laser-Lichtstrahl und insbesondere gepulst sein.

Die Vorrichtung 1 umfasst in Pfeilrichtung 4 des Lichtstrahls 2 ein optisches Eingangselement 5, das den ausgestrahlten Lichtstrahl 2 zu einem verengten Lichtstrahl 6 verengt. Dazu ist das optische Eingangselement 5 z.B. eine Sammellinse od.dgl., welche den von der Strahlungsquelle 3 ausgesandten Lichtstrahl 2 durch Fokussieren verengt. Im Beispiel der Fig. 1 ist hingegen das optische Eingangselement 5 ein Kollimator 7, der den von der Strahlungsquelle 3 ausgesandten Lichtstrahl 2 zu einem kollimierten (verengten) Lichtstrahl 6 verengt.

In weiterer Folge trifft der verengte Lichtstrahl 6 auf ein Spiegelrad 8 auf, welches um eine Achse 9 rotiert, wie ein Pfeil 10 symbolisiert. Das Spiegelrad 8 hat einen ersten Sektor 11 und einen zweiten Sektor 12, im Beispiel der Fig. 1 sogar jeweils zwei erste und zweite Sektoren 11, 12; dabei folgt in Umfangsrichtung des Spiegelrads 8 auf jeden ersten Sektor 11 ein zweiter Sektor 12 und umgekehrt.

In dem in Fig. 1 dargestellten Zeitpunkt wird einer der ersten Sektoren 11 des Spiegelrads 8 gerade von dem verengten Lichtstrahl 6 getroffen, d.h. ein Auftreffpunkt 13 des verengten Lichtstrahls 6 auf dem Spiegelrad 8 liegt in diesem ersten Sektor 11. Es versteht sich, dass der Auftreffpunkt 13 kein Punkt im mathematischen Sinn ist, sondern einen gewissen Durchmesser hat, welcher durch die maximal zulässige Energiedichte auf dem Spiegelrad 8 begrenzt ist, um eine drohende thermische Überlastung zu vermeiden, wie dem Fachmann bekannt ist.

Der erste Sektor 11 reflektiert den verengten Lichtstrahl 6 vom optisches Eingangselement 5 entlang eines ersten Strahlengangs 14 zu einem ersten optischen Ausgangselement 15. Das erste optische Ausgangselement 15 erweitert den verengten Lichtstrahl 6 zu einem erweiterten Lichtstrahl 16, welcher in Richtung 17 aus der Vorrichtung 1 austritt.

Beim weiteren Rotieren des Spiegelrads 8 wird - auf den ersten Sektor 11 folgend - der zweite Sektor 12 des Spiegelrads 8 von dem verengten Lichtstrahl 6 getroffen, und zwar dann, wenn der Auftreffpunkt 13, der beim Rotieren einen Kreisbogen auf dem Spiegelrad 8 beschreibt, eine (hier: radiale) Kante 18 passiert, welche den ersten vom zweiten Sektor 11, 12 trennt, bzw. vielmehr umgekehrt, wenn die Kante 18 des rotierenden Spiegelrads 8 den Auftreffpunkt 13 passiert. Der zweite Sektor 12 lässt in diesem Beispiel den verengten Lichtstrahl 6 entlang eines vom ersten Strahlengang 14 verschiedenen zweiten Strahlengangs 19 vom optisches Eingangselement 5 zu einem zweiten optischen Ausgangselement 20 passieren, welches den verengten Lichtstrahl 6 zu einem erweiterten Lichtstrahl 21 erweitert; dieser tritt in Richtung 22 aus der Vorrichtung 1 aus.

Ähnlich dem optischen Eingangselement 5 sind optional das erste und das zweite optische Ausgangselement 15, 20 z.B. jeweils durch eine oder mehrere Linsen, einen Kollimator bzw. (hier:) ein Teleskop 23, 24 gebildet, welches den (hier: kollimierten) verengten Lichtstrahl 6 zu einem kollimierten (erweiterten) Lichtstrahl 16 bzw. 21 erweitert, od.dgl. In einer weiteren optionalen Ausführungsform ist das erste und das zweite optische Ausgangselement 15, 20 jeweils an eine Glasfaser (nicht dargestellt) angeschlossen, um den jeweiligen erweiterten Lichtstrahl 16, 21 in die angeschlossene Glasfaser einzukoppeln.

Es versteht sich, dass im ersten und/oder im zweiten Strahlengang 14, 19 ferner optional zumindest ein weiteres optisches Element, z.B. ein spektraler Filter, ein Polarisationsfilter bzw. ein frequenzverdoppelnder Kristall, angeordnet sein kann.

Zum Rotieren des Spiegelrads 8 hat die Vorrichtung 1 optional einen an das Spiegelrad 8 angekuppelten Motor 25, welcher z.B. von einem Drehzahlregler gespeist ist. Der Drehzahlregler empfängt dabei die Drehzahl und/oder Position des Spiegelrads 8 von einem Sensor der Vorrichtung 1, z.B. einem an den Motor 25 angekuppelten herkömmlichen Drehzahl- oder Positionssensor oder einem Sensor, welcher jeweils erfasst, wenn die Kante 18 den Auftreffpunkt 13 passiert, beispielsweise anhand von beim Passieren an der Kante 18 reflektiertem Streulicht, woraus der (in diesem Fall: optische) Sensor die Drehzahl bzw. Position ermittelt. Alternativ könnte das Spiegelrad 8 über eine von der Vorrichtung 1 separate Welle (z.B. der Welle eines rotierenden Prismenspiegels eines Laserscanners), ein Getriebe od.dgl. zum Rotieren gebracht werden.

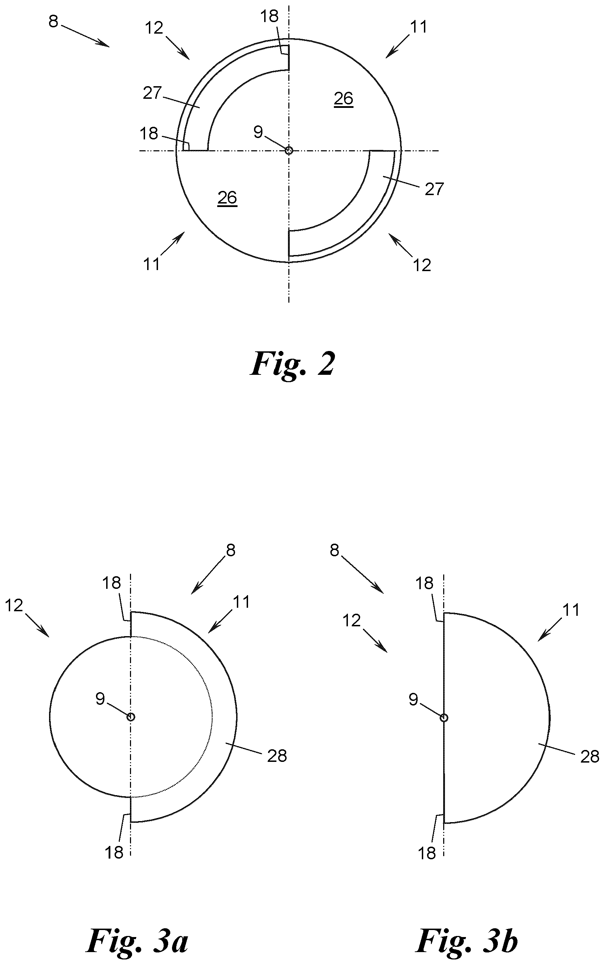

Anhand der Fig. 2 bis 7 werden im Folgenden verschiedene Ausführungsvarianten der Vorrichtung 1, insbesondere des Spiegelrads 8, beispielhaft erläutert; dabei sind gleiche oder ähnliche Elemente mit denselben Bezugszeichen versehen.

Fig. 2 zeigt eine Variante des Spiegelrads 8, bei welcher jeder der (hier: zwei) ersten Sektoren 11 zum Reflektieren des verengten Lichtstrahls 6 einen Spiegel 26 hat (im dargestellten Beispiel ist dazu das gesamte Spiegelrad 8 verspiegelt). Ferner hat jeder der (hier: zwei) zweiten Sektoren 12 eine Öffnung 27, welche den verengten Lichtstrahl 6 passieren lässt.

Im Beispiel der Fig. 3a hat das Spiegelrad 8 nur jeweils einen ersten Sektor 11 und einen zweiten Sektor 12. Dabei hat jeder (hier: der einzige) erste Sektor 11 zum Reflektieren des verengten Lichtstrahls 6 einen radial abstehenden (ganz oder teilweise) verspiegelten Flügel 28; im Gegensatz dazu ist jeder (hier: der einzige) zweite Sektor 12 zum Passierenlassen des verengten Lichtstrahls 6 flügellos.

Das Beispiel der Fig. 3b zeigt eine Variante des Spiegelrads 8 von Fig. 3a, in welcher das Spiegelrad 8 - wie in seinem zweiten Sektor 12 ersichtlich - besonders klein und der Flügel 28 dazu vergleichsweise groß ist.

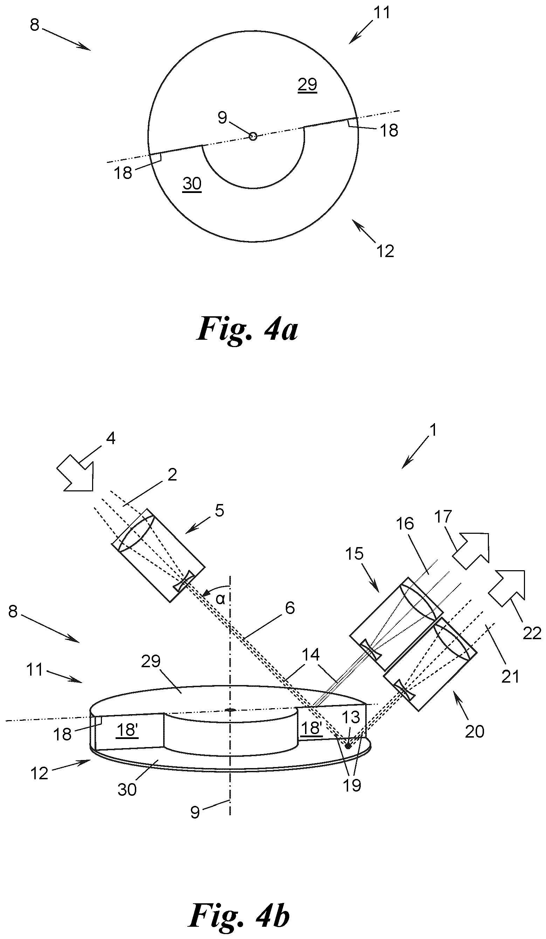

Im Gegensatz zu den zuvor beschriebenen Varianten der Fig. 1 bis 3, bei welchen jeder zweite Sektor 12 den verengten Lichtstrahl 6 jeweils passieren lässt, haben die im Folgenden erläuterten Varianten der Fig. 4 bis 6 jeweils zweite Sektoren 12, welche den verengten Lichtstrahl 6 reflektieren.

Im Beispiel der Fig. 4a und 4b hat jeder erste Sektor 11 und jeder zweite Sektor 12 des Spiegelrads 8 zum Reflektieren des verengten Lichtstrahls 6 jeweils einen zur genannten Achse 9 normalen Planspiegel 29 bzw. 30. Der Planspiegel 30 jedes zweiten Sektors 12 ist dabei gegenüber dem Planspiegel 29 jedes ersten Sektors 11 axial, d.h. in Richtung der Achse 9, versetzt. In dieser Variante ist der erste Strahlengang 14 nach dem Spiegelrad 8 zum zweiten Strahlengang 19 nach dem Spiegelrad 8 parallel (Fig. 4b) . Die sich an jeder Kante 18 zwischen dem ersten und dem zweiten Sektor 11, 12 jeweils erstreckende Fläche 18' steht dabei entweder normal zu den Planspiegeln 29, 30 oder sie bildet hinter der Kante 18 eine Hinterschneidung.

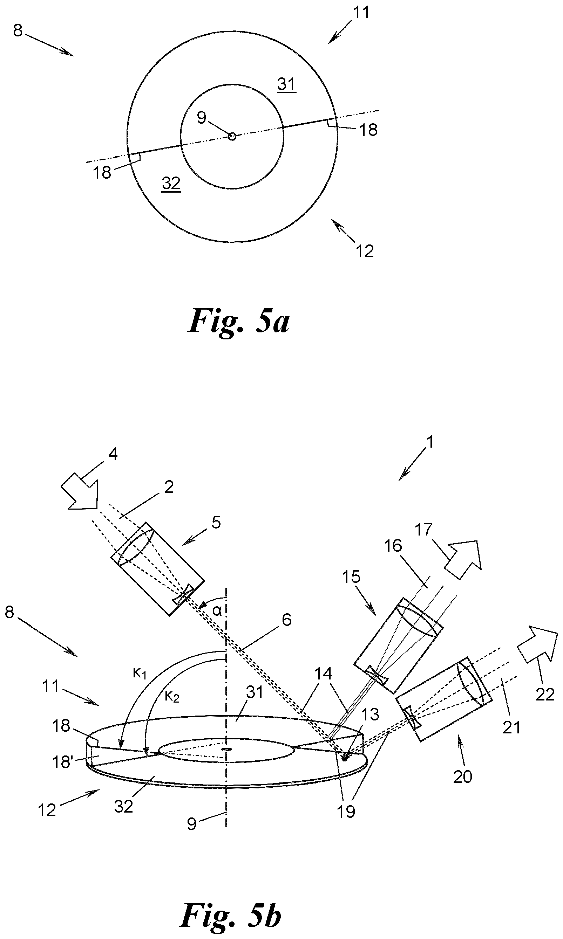

In dem in den Fig. 5a und 5b dargestellten Beispiel hat jeder erste Sektor 11 und jeder zweite Sektor 12 des Spiegelrads 8 jeweils einen Spiegel in Form eines zur genannten Achse 9 koaxialen Drehkegelmantelsegments 31 bzw. 32. Dabei hat das Drehkegelmantelsegment 32 des zweiten Sektors 12 einen vom Drehkegelmantelsegment 31 des ersten Sektors 11 verschiedenen Kegelöffnungswinkel, d.h. das Drehkegelmantelsegment 31 jedes ersten Sektors 11 hat einen Kegelöffnungswinkel K₁ und das Drehkegelmantelsegment 32 jedes zweiten Sektors 12 hat einen davon verschiedenen Kegelöffnungswinkel K₂. Auf diese Weise reflektiert das erste Drehkegelmantelsegment 31 den verengten Lichtstrahl 6 entlang des ersten Strahlengangs 14 und das zweite Drehkegelmantelsegment 32 entlang des zweiten Strahlengangs 19. Im dargestellten Beispiel ist der Kegelöffnungswinkel K₁ im ersten Sektor 11 kleiner als 90°, wogegen der Kegelöffnungswinkel K₂ im zweiten Sektor 12 größer als 90° ist. Für die Flächen 18' an den Kanten 18 gilt das in Bezug auf Fig. 4b Gesagte.

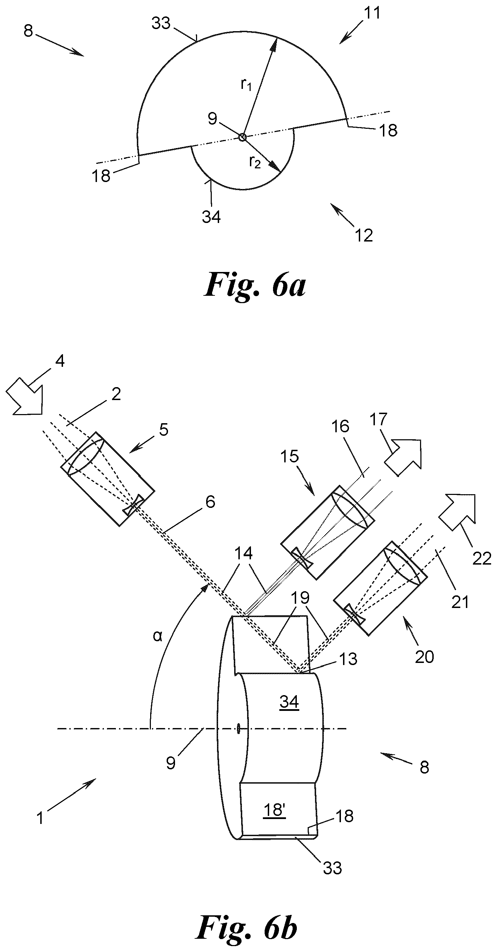

Die Fig. 6a und 6b zeigen ein Beispiel für ein Spiegelrad 8, bei welchem jeder erste Sektor 11 und jeder zweite Sektor 12 zum Reflektieren des verengten Lichtstrahls 6 jeweils einen Spiegel in Form eines zur genannten Achse 9 koaxialen Drehzylindermantelsegments 33 bzw. 34 hat. Das Drehzylindermantelsegments 34 jedes zweiten Sektors 12 hat einen vom Drehzylindermantelsegment 33 jedes ersten Sektors 11 verschiedenen Zylinderradius, d.h. das Drehzylindermantelsegment 33 jedes ersten Sektors 11 hat einen Zylinderradius r₁ und das Drehzylindermantelsegment 34 jedes zweiten Sektors 12 hat einen davon verschiedenen Zylinderradius r₂. Dadurch reflektieren das erste bzw. das zweite Drehzylindermantelsegment 33, 34 den verengten Lichtstrahl 6 jeweils entlang des ersten bzw. des zweiten Strahlengangs 14 bzw. 19. Im dargestellten Beispiel ist der Zylinderradius r₁ des Drehzylindermantelsegments 33 des ersten Sektors 11 größer als der Zylinderradius r₂ des Drehzylindermantelsegments 34 des zweiten Sektors 12. Für die Flächen 18', welche an den jeweiligen Kanten 18 den Übergang von einem ersten zu einem zweiten Sektor 11, 12 bilden, gilt wieder das in Bezug auf Fig. 4b Gesagte, wobei die Kanten 18 in der dargestellten Variante parallel sind.

In allen gezeigten Varianten verlaufen die Kanten 18 entweder radial (Varianten der Fig. 1 bis 5 und 7) oder achsparallel (Variante der Fig. 6a und 6b), jedenfalls quer zur Rotationsrichtung; alternativ dazu könnten die Kanten 18 jedoch schräg zur Rotationsrichtung verlaufen und/oder eine Krümmung haben.

Der verengte Lichtstrahl 6 spannt entweder mit der Achse 9 eine Ebene auf oder ist gegenüber der Achse 9 windschief. Im Allgemeinen hat der verengte Lichtstrahl 6 vor seinem Auftreffen auf das Spiegelrad 8 gegenüber der Achse 9 einen Winkel α von mehr als 0° und weniger als 90°, oder es sind im ersten und/oder zweiten Strahlengang 14, 19 weitere optische Elemente zur Strahlteilung angeordnet. Ist der verengte Lichtstrahl 6 gegenüber der Achse 9 windschief, wird der Winkel α aus einer Projektion der beiden in eine zu beiden parallele Ebene ermittelt. Insbesondere in der Variante der Fig. 5a und 5b kann bei entsprechenden Kegelöffnungswinkeln K₁, K₂ der genannte Winkel α auch ohne weitere optische Elemente 0° oder 90° betragen. Auch im Beispiel der Fig. 6a und 6b kann der Winkel α ohne weitere optische Elemente 90° betragen, z.B. wenn der verengte Lichtstrahl 6 gegenüber der Achse 9 windschief ist.

Es versteht sich, dass die Sektoren 11, 12 des Spiegelrads 8, wie in den Beispielen gezeigt, gleich groß oder alternativ verschieden groß sein können. Ferner kann das Spiegelrad 8 jeweils einen, zwei oder mehr erste und zweite Sektoren 11, 12 haben. Überdies könnte das Spiegelrad 8 zumindest in einigen der beschriebenen Varianten eine entsprechende Anzahl an dritten Sektoren haben, welche jeweils den verengten Lichtstrahl 6 entlang eines vom ersten und vom zweiten Strahlengang 14, 19 verschiedenen dritten Strahlengangs reflektieren oder passieren lassen; so könnte im Beispiel der Fig. 4a und 4b ein dritter Sektor noch weiter axialverschoben sein, im Beispiel der Fig. 5a und 5b ein dritter Sektor ein Drehkegelmantelsegment mit einem vom ersten und zweiten Kegelöffnungswinkel K₁, K₂ verschiedenen dritten Kegelöffnungswinkel haben oder im Beispiel der Fig. 6a und 6b ein dritter Sektor ein Drehzylindermantelsegment mit einem vom ersten und zweiten Zylinderradius r₁, r₂ verschiedenen dritten Zylinderradius haben. Alternativ oder ergänzend sind Kombinationen der beschriebenen Varianten möglich, insbesondere eine Kombination einer der Varianten der Fig. 2 oder 3 mit jener der Fig. 4a und 4b - z.B. zwei gegeneinander axialverschobene Sektoren in Kombination mit einem Sektor mit Öffnung - oder eine Kombination einer der Varianten der Fig. 2, 3, 4 oder 6 mit einem Drehkegelmantelsegment der Fig. 5a und 5b - z.B. ein Sektor mit verspiegeltem Flügel, ein flügelloser Sektor in Kombination mit einem Sektor mit Drehkegelmantelsegment, oder ein Sektor mit Drehkegelmantelsegment in Kombination mit einem Sektor mit Drehzylindermantelsegment - usw. usf.

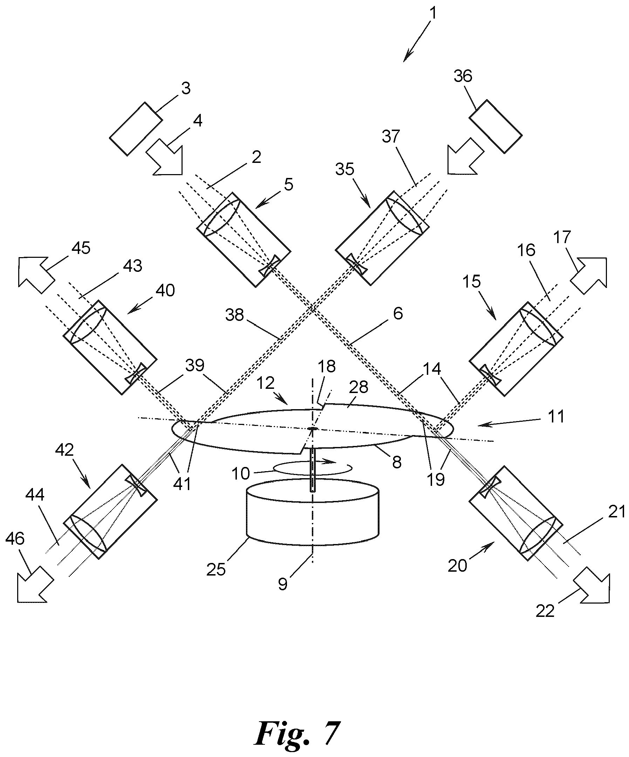

Das Beispiel der Fig. 7 zeigt eine Ausführungsform, in welcher die Vorrichtung 1 ein weiteres optisches Eingangselement 35 umfasst, das aus einem von einer weiteren Strahlungsquelle 36 ausgesandten weiteren Lichtstrahl 37 einen weiteren verengten Lichtstrahl 38 erzeugt. Wie der verengte Lichtstrahl 6 kann der weitere verengte Lichtstrahl 38 fokussiert oder kollimiert sein. In einem weiteren ersten Strahlengang 39 ist nach dem Spiegelrad 8 ein weiteres erstes optische Ausgangselement 40, in einem weiteren zweiten Strahlengang 41 nach dem Spiegelrad 8 ein weiteres zweites optisches Ausgangselement 42 angeordnet. Die beiden weiteren optischen Ausgangselemente 40, 42 erweitern den weiteren verengten Lichtstrahl 38 jeweils zu einem weiteren erweiterten Lichtstrahl 43 bzw. 44, welcher jeweils in Richtung 45 bzw. 46 aus der Vorrichtung 1 austritt. Das Spiegelrad 8 ist dabei derart in dem weiteren verengten Lichtstrahl 38 angeordnet, dass der erste Sektor 11 den weiteren verengten Lichtstrahl 38 entlang des weiteren ersten Strahlengangs 39 reflektiert und der zweite Sektor 12 den weiteren verengten Lichtstrahl 38 entlang des weiteren zweiten Strahlengangs 41 passieren lässt. Das Spiegelrad 8 kann dabei nach jeder der erläuterten Varianten ausgeführt sein, sodass der zweite Sektor 12 des Spiegelrads 8 den weiteren verengten Lichtstrahl 38 je nach Variante entlang des weiteren zweiten Strahlengangs 41 entweder passieren lässt oder reflektiert.

Es versteht sich, dass die Vorrichtung 1 nach dem in Fig. 7 dargestellten Prinzip ferner zum Lenken noch zusätzlicher Lichtstrahlen, d.h. auch jeweils eines von einer dritten, vierten etc. Lichtquelle ausgesandten dritten, vierten etc. Lichtstrahls, ausgebildet sein kann.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Vorrichtung zum Lenken eines von einer Strahlungsquelle (3) ausgesandten Lichtstrahls (2), insbesondere eines gepulsten Laser-Lichtstrahls, **gekennzeichnet durch**
ein optisches Eingangselement (5), das zum Verengen des ausgesandten Lichtstrahls (2) zu einem verengten Lichtstrahl (6) ausgebildet ist, und
ein um eine Achse (9) rotierbares Spiegelrad (8), welches derart in dem verengten Lichtstrahl (6) angeordnet ist, dass beim Rotieren aufeinanderfolgend ein erster und ein zweiter Sektor (11, 12) des Spiegelrads (8) von dem verengten Lichtstrahl (6) getroffen werden,
wobei der erste Sektor (11) dazu ausgebildet ist, den verengten Lichtstrahl (6) entlang eines ersten Strahlengangs (14) zu reflektieren, und der zweite Sektor (12) dazu ausgebildet ist, den verengten Lichtstrahl (6) entlang eines vom ersten verschiedenen zweiten Strahlengangs (19) zu reflektieren oder passieren zu lassen, und
wobei im ersten Strahlengang (14) nach dem Spiegelrad (8) ein erstes optisches Ausgangselement (15) und im zweiten Strahlengang (19) nach dem Spiegelrad (8) ein zweites optisches Ausgangselement (20) angeordnet ist, die jeweils zum Erweitern des verengten Lichtstrahls (6) zu einem erweiterten Lichtstrahl (16, 21) ausgebildet sind.

2. Vorrichtung nach Anspruch 1, **dadurch gekennzeichnet, dass** das Spiegelrad (8) jeweils zwei oder mehr erste und zweite Sektoren (11, 12) hat, wobei in Umfangsrichtung des Spiegelrads (8) auf jeden ersten Sektor (11) ein zweiter Sektor (12) folgt und umgekehrt.

3. Vorrichtung nach Anspruch 1 oder 2, **dadurch gekennzeichnet, dass** jeder erste Sektor (11) zum Reflektieren des verengten Lichtstrahls (6) einen Spiegel (26) und jeder zweite Sektor (12) zum Passierenlassen des verengten Lichtstrahls (6) eine Öffnung (27) hat.

4. Vorrichtung nach Anspruch 1 oder 2, **dadurch gekennzeichnet, dass** jeder erste Sektor (11) zum Reflektieren des verengten Lichtstrahls (6) einen radial abstehenden verspiegelten Flügel (28) hat und jeder zweite Sektor (12) zum Passierenlassen des verengten Lichtstrahls (6) flügellos ist.

5. Vorrichtung nach Anspruch 1 oder 2, **dadurch gekennzeichnet, dass** jeder erste und jeder zweite Sektor (11, 12) zum Reflektieren des verengten Lichtstrahls (6) jeweils einen zur genannten Achse (9) normalen Planspiegel (29, 30) hat, wobei der Planspiegel (30) jedes zweiten Sektors (12) gegenüber dem Planspiegel (29) jedes ersten Sektors (11) axial versetzt ist.

6. Vorrichtung nach Anspruch 1 oder 2, **dadurch gekennzeichnet, dass** jeder erste und jeder zweite Sektor (11, 12) zum Reflektieren des verengten Lichtstrahls (6) jeweils einen Spiegel in Form eines zur genannten Achse koaxialen Drehkegelmantelsegments (31, 32) hat, wobei das Drehkegelmantelsegment (32) jedes zweiten Sektors (12) einen vom Drehkegelmantelsegment (31) jedes ersten Sektors (11) verschiedenen Kegelöffnungswinkel (K₂) hat.

7. Vorrichtung nach Anspruch 1 oder 2, **dadurch gekennzeichnet, dass** jeder erste und jeder zweite Sektor (11, 12) zum Reflektieren des verengten Lichtstrahls (6) jeweils einen Spiegel in Form eines zur genannten Achse koaxialen Drehzylindermantelsegments (33, 34) hat, wobei das Drehzylindermantelsegment (34) jedes zweiten Sektors (12) einen vom Drehzylindermantelsegment (33) jedes ersten Sektors (11) verschiedenen Zylinderradius (r₂) hat.

8. Vorrichtung nach einem der Ansprüche 1 bis 7, **dadurch gekennzeichnet, dass** das optische Eingangselement (5) ein Kollimator (7) zum Verengen des von der Strahlungsquelle (3) ausgesandten Lichtstrahls (2) zu einem kollimierten verengten Lichtstrahl (6) ist.

9. Vorrichtung nach einem der Ansprüche 1 bis 8, **dadurch gekennzeichnet, dass** das erste und das zweite optische Ausgangselement (15, 20) jeweils ein Kollimator (23, 24) ist, welcher zum Erweitern des verengten Lichtstrahls (6) zu einem kollimierten erweiterten Lichtstrahl (16, 21) ausgebildet ist.

10. Vorrichtung nach einem der Ansprüche 1 bis 9, **dadurch gekennzeichnet, dass** das erste und das zweite optische Ausgangselement (15, 20) jeweils an eine Glasfaser angeschlossen ist.

11. Vorrichtung nach einem der Ansprüche 1 bis 10, **dadurch gekennzeichnet, dass** zum Rotieren an das Spiegelrad (8) ein von einem Drehzahlregler gespeister Motor (25) angekuppelt ist.

12. Vorrichtung nach einem der Ansprüche 1 bis 11, **gekennzeichnet durch** ein weiteres optisches Eingangselement (35) zum Erzeugen eines weiteren verengten Lichtstrahls (38) aus einem von einer weiteren Strahlungsquelle (36) ausgesandten weiteren Lichtstrahl (37), ein in einem weiteren ersten Strahlengang (39) nach dem Spiegelrad (8) angeordnetes weiteres erstes und ein in einem weiteren zweiten Strahlengang (41) nach dem Spiegelrad (8) angeordnetes weiteres zweites optisches Ausgangselement (40, 42), die jeweils zum Erweitern des weiteren verengten Lichtstrahls (38) zu einem weiteren erweiterten Lichtstrahl (43, 44) ausgebildet sind, wobei das Spiegelrad (8) derart in dem weiteren verengten Lichtstrahl (38) angeordnet ist, dass der erste Sektor (11) den weiteren verengten Lichtstrahl (38) entlang des weiteren ersten Strahlengangs (39) reflektiert und der zweite Sektor (12) den weiteren verengten Lichtstrahl (38) entlang des weiteren zweiten Strahlengangs (41) reflektiert oder passieren lässt.
